# FASCICULE DE BREVET EUROPEEN

(11) **EP 1 870 583 B1**
(45) Date de publication et mention de la délivrance du brevet: **02.09.2009**
(21) Numéro de dépôt: 07110514.2
(22) Date de dépôt: 19.06.2007
(51) Int. Cl.: F02D 13/02, F01L 31/16

(54) **Procédé pour commander un moteur à combustion interne**
Verfahren zur Anstgeuerung eines Verbrennungsmotors
method for controlling an internal combustion engine

(30) Priorité: 21.06.2006 FR 0652581
(43) Date de publication de la demande: 26.12.2007
(73) Titulaire: PEUGEOT CITROËN AUTOMOBILES S.A., 78140 Vélizy Villacoublay (FR)
(72) Inventeur: Noiret, Christian, 78230, Le Pecq (FR)
(74) Mandataire: Ménès, Catherine

(56) Documents cités:
- WO-A-01/20136
- DE-A1- 2 901 186
- DE-A1- 4 104 872
- DE-A1- 10 359 058
- GB-A- 2 328 975
- JP-A- 7 269 381
- JP-A- 60 247 008
- US-A1- 5 233 948
- US-A1- 2003 131 805
- US-B1- 6 397 813

## Description

La présente invention concerne un procédé pour opérer un moteur à combustion interne incluant une modification des étapes d'admission d'air frais et/ou d'échappement des gaz brûlés

système d'admission d'air à diagramme d'ouverture ajustable pour moteur de véhicules automobiles.

Dans un moteur à combustion interne dit à 4 temps, l'admission d'air est commandée par la levée des soupapes d'admission mues par un arbre à cames entraîné, via une courroie de distribution, par le vilebrequin l'arbre à cames tournant d'un demi-tour par tour de vilebrequin pour un moteur à 4 cylindres. Selon un cycle Otto conventionnel, la soupape d'admission est levée lorsque le piston est aux environs du point mort haut, la descente du piston créant une aspiration permettant le remplissage du cylindre. La levée est terminée au point mort bas, l'angle d'ouverture étant typiquement supérieur à 180° elle est choisie de manière à favoriser le fonctionnement du moteur à pleine charge

Pour réduire le couple du moteur il est nécessaire de réduire la quantité d'air admise en fermant le papillon. Ce vannage réduit effectivement le débit d'air mais augmente significativement les pertes par pompage et dégrade le rendement du moteur

Pour remédier à cet inconvénient, il est nécessaire d'agir sur le diagramme d'admission d'air afin de réduire les pertes par pompage responsables de cette dégradation de rendement. A cet effet, on peut s'appuyer sur deux applications possibles du cycle d'Atkinson :
- fermeture précoce de la soupape d'admission en réduisant son diagramme d'ouverture. Dans ce cas, on cherche à fermer très tôt la soupape afin d'admettre très peu d'air dans le cylindre ou encore
- fermeture tardive de la soupape d'admission en allongeant son diagramme d'ouverture. Dans ce cas, on cherche à fermer très tard la soupape avec pour effet de refouler l'air admis et ainsi de contrôler la masse d'air réellement présente dans le cylindre.

Bien entendu, dans les deux cas, la vanne papillon de la conduite d'admission reste ouverte puisque la masse d'air admise, et donc la puissance, est contrôlée non pas par la vanne elle-même mais par l'instant de fermeture de la soupape d'admission.

Ces deux approches permettent de réduire de manière significative les pertes par pompage et ainsi d'augmenter le rendement du moteur en charge partielle afin de réduire la consommation en carburant.

Mais dans les deux cas, cette augmentation du rendement se fait au prix d'une diminution de la puissance du moteur, notamment à forte charge car les lois de lévées (Ech et Adm) ne sont plus optimisées pour une puissance maxi.

De nombreux dispositifs techniques ont déjà été proposés pour mettre en oeuvre les solutions mentionnées plus haut s'appuyant sur une modification du diagramme d'ouverture de la soupape d'admission selon le cycle d'Atkinson afin d'améliorer le rendement des moteurs à bas régime.

On connaît en particulier des systèmes capables d'appliquer à la soupape d'admission plusieurs diagrammes d'ouverture possibles que l'on peut sélectionner selon les besoins. Ces systèmes comportent au minimum deux cames présentant des levées et des largeurs d'ouverture différentes. L'organe de transmission de l'effort, poussoir, linguet ou culbuteur, dispose d'un système de « crabotage » permettant à la soupape de se déplacer suivant un des diagrammes d'ouverture disponibles.

Ces systèmes ont l'inconvénient d'être mécaniquement très complexes.

La demande de brevet français n° 2 603 662 fait référence par ailleurs à un système dans lequel le diagramme d'ouverture est très large. Un déphaseur de l'arbre à cames permet de réaliser le cycle d'Atkinson, mais pénalise fortement la puissance spécifique du moteur.

Aussi, un problème technique à résoudre par l'objet de la présente invention est de modifier le mode d'opération d'un moteur à combustion interne pour permettre d'augmenter le rendement du moteur en charge partielle par l'utilisation d'un cycle d'Atkinson, sans pénaliser les performances spécifiques du moteur.

Une solution au problème technique posé consiste, pour un moteur comportant au moins un cylindre muni d'un piston et d'au moins deux soupapes d'admission d'air dans a chambre de combustion du cylindre, à déterminer la charge moteur, et lorsque le moteur est en charge partielle, à déphaser les levées des soupapes d'admission d'un même cylindre pour générer une loi de levée équivalente à une loi d'admission large et réaliser alors le cycle d'Atkinson. Au fur et à mesure que la charge moteur croît, le déphasage est réduit de sorte que la puissance spécifique du moteur n'est pas réduite.

Plus précisément, la présente invention a pour objet un perfectionnement au procédé connu du brevet US 5233948 pour opérer un moteur à combustion interne dont les chambres de combustion associées à chacun des pistons sont munies d'au moins deux soupapes d'admission comportant une étape de détermination de la charge moteur et lorsque le moteur est en charge partielle, une étape de déphasage des levées des soupapes d'admission pour générer une loi de levée équivalente à une loi d'admission large pour réaliser le cycle d'Atkinson, le déphasage étant obtenu au moyen d'un ensemble comportant une première came pour la commande d'une première soupape d'admission, disposée sur un premier arbre à cames et, d'une deuxième came pour la commande d'une deuxième soupape d'admission, liée à un deuxième arbre à cames, concentrique au premier arbre et disposé à l'intérieur du premier arbre, ce second arbre étant associé à un déphaseur angulaire apte à faire varier la position angulaire d'une came par rapport l'autre par rotation d'un arbre à came par rapport à l'autre. Selon l'invention, la deuxième came est liée par un toc d'entrainement au deuxième arbre ; le toc se déplaçant dans une encoche du premier arbre et en ce que les deux arbres sont liés ou entrainés par une même poulie entrainée elle-même par une courroie, ledit deuxième arbre étant également entrainé par la courroie.

Selon un mode de réalisation préféré, les soupapes d'admission présentent un même diagramme d'ouverture de sorte que la loi de levée équivalente est particulièrement simple.

Ainsi, lorsque les diagrammes d'ouverture sont déphasés, la loi de levée équivalente est très large, ce qui permet d'utiliser le cycle d'Atkinson dans la version « fermeture tardive » mentionnée plus haut et d'admettre l'air à pression atmosphérique, c'est-à-dire sans pertes, puis le refouler pendant la remontée du piston de manière à contrôler la masse d'air réellement admise par le moteur.

Par contre, en pleine charge et en fonction du régime, le déphasage entre les diagrammes des soupapes est réduit afin d'augmenter la masse d'air admise. Naturellement, lorsque le déphasage est nul, le niveau de performance initial du moteur est restitué.

On peut également remarquer que le déphasage de levée entre les soupapes permet de plus, de générer un mouvement de tourbillon. (« swirl ») augmentant les turbulences et améliorant ainsi la combustion.

En outre, l'invention présente l'avantage de ne pas pénaliser la masse mobile de la commande de soupape, contrairement à la majorité des autres systèmes connus. Le potentiel d'efficacité de la loi de levée et de maîtrise des frottements reste donc intact.

On notera que l'invention s'applique tout aussi bien aux moteurs Diesel.

De façon complémentaire à ce qui a été proposé ci-dessus pour l'admission, avec des chambres de combustion pourvues d'au moins deux soupapes d'échappement, il est possible de moduler les levées des soupapes d'échappement en fonction de la charge du moteur. Dans ce cas, à bas régime, on cherchera à obtenir une loi équivalente correspondant à une levée étroite, alors qu'à haut régime, on cherchera à élargir la loi équivalente des levées de soupapes d'échappement. En effet, pour augmenter le rendement, il est nécessaire de favoriser la phase de détente, c'est-à-dire de réduire l'avance à l'ouverture à l'échappement. A haut régime, une ouverture trop brève des soupapes à l'échappement est toutefois incompatible avec une bonne vidange de la chambre de combustion, d'où selon l'invention un retour à une loi de levée équivalente plus conventionnelle pour ne pas limiter les performances du moteur.

Ce mode de réalisation pourra être mise en oeuvre de façon similaire à ce qui a été décrit pour les soupapes d'admission, en utilisant deux arbres à cames concentriques pour la commande d'une première et d'une seconde soupape d'échappement et un déphaseur angulaire ou en utilisant une première came portée par la première soupape d'échappement et une deuxième came pour la commande de la seconde soupape d'échappement, disposée sur un arbre à came d'admission, avec un déphaseur angulaire.

La description qui va suivre en regard des dessins annexés, donnés à titre d'exemples non limitatifs, fera bien comprendre en quoi consiste l'invention et comment elle peut être réalisée.

La figure 1a est un schéma montrant des diagrammes d'ouverture non déphasés des soupapes d'admission.

La figure 1b est un schéma montrant des diagrammes d'ouverture déphasés des soupapes d'admission, ainsi que le diagramme équivalent.

La figure 2a est une vue en coupe d'un premier mode de réalisation d'un système d'admission conforme à l'invention.

La figure 2b est une vue de côté du système de la figure 2a, cames non déphasées.

La figure 2c est une vue de côté du système de la figure 2a, cames déphasées.

La figure 3 est un schéma en perspective d'un second mode de réalisation d'un système d'admission mais qui n'est pas conforme à l'invention.

Les figures 4a et 4b sont des schémas analogues à ceux de la figure 1b, avec de plus un déphasage des soupapes d'échappement. La figure 4a illustre une configuration de moteur à charge réduite, la figure 4b d'un moteur à charge pleine.

La figure 5 est une variante du mode de réalisation illustré à la figure 3, adapté pour permettre un déphasage des soupapes d'admission et des soupapes d'échappement.

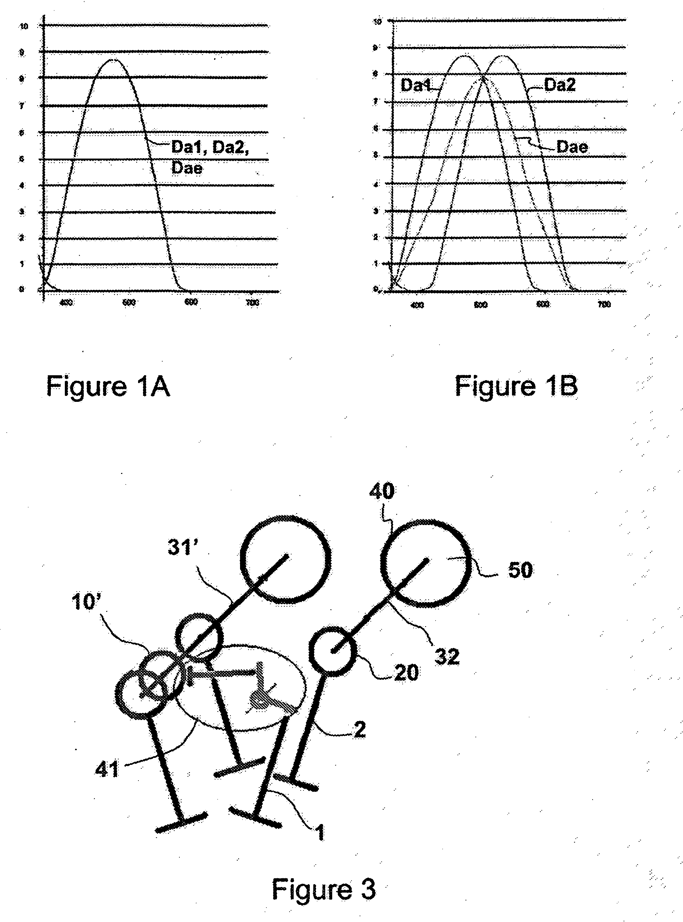

Sur la figure 1a sont représentés des diagrammes d'ouverture D1 et D2 de deux soupapes d'admission d'un système d'admission d'air à diagramme d'ouverture ajustable. Ces diagrammes dont identiques et présentent entre eux un déphasage nul, c'est pourquoi ils apparaissent confondus sur cette figure. Bien entendu, le diagramme équivalent DE pour le système est également identique. Cette configuration sans déphasage est celle utilisée en pleine charge pour retrouver les performances initiales du moteur.

En charge partielle, il y a avantage à pouvoir ajuster le déphasage entre les diagrammes d'ouverture Da1 et Da2 des soupapes afin d'utiliser un cycle d'Atkinson et augmenter le rendement.

Les diagrammes Da1 et Da2 sont montrés sur la figure 1b avec un déphasage important, conduisant à un diagramme équivalent DaE large, correspondant à une fermeture retardée de l'admission d'air.

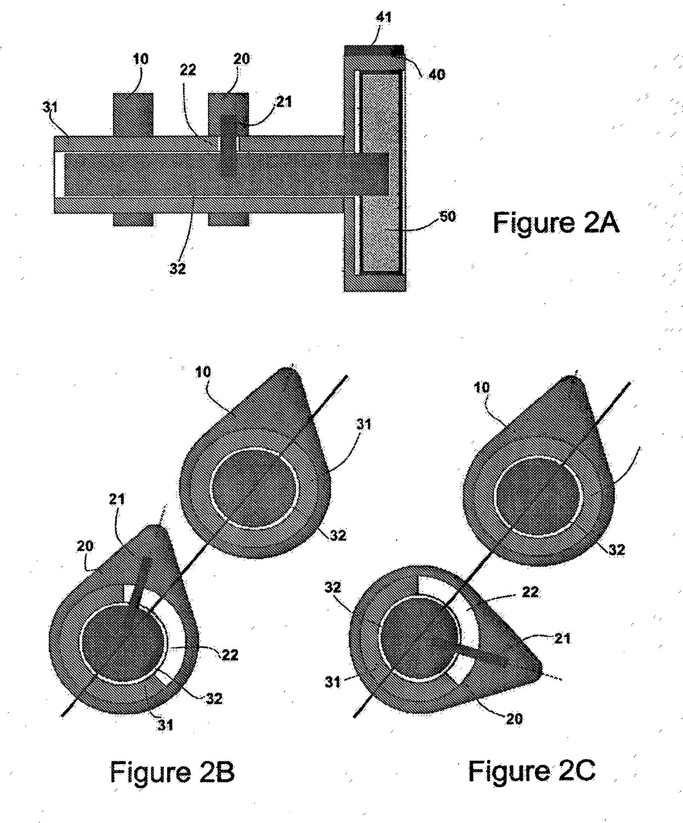

Les figures 2a, 2b et 2c illustrent un mode de réalisation du système d'admission d'air conforme à l'invention comprenant deux cames 10, 20 commandant chacune l'ouverture et la fermeture d'une soupape d'admission, non représentée.

Comme le montre plus spécialement la figure 2a, la came 10 est disposée sur un premier arbre 31 à cames externe creux, tandis que la came 20 est liée par un toc 21 d'entraînement à un deuxième arbre 32 à cames concentrique et disposé à l'intérieur du premier arbre 31.

L'arbre 31 à cames externe est directement lié à une poulie 40 d'entraînement, laquelle est elle-même entraînée par une courroie 41, ou une chaîne.

L'arbre 32 à cames est relié à un déphaseur angulaire 50 qui permet, par rotation de l'arbre 32 relativement à l'arbre externe 31, d'ajuster un déphasage angulaire de la came 20 par rapport à la came 10. La rotation de la came 20 est réalisée du fait que le toc 21 est lié à la came 20 et à l'arbre interne 32 et qu'il peut se déplacer dans une encoche 22.

La came 32 est alors dite à calage variable, la came 31 étant à calage fixe.

Le déphasage angulaire est donc ajustable de manière continue entre les deux positions extrêmes du toc 21 dans l'encoche 22.

Lorsque le déphaseur 50 est réglé à une valeur de déphasage angulaire adéquat selon la charge du moteur, l'ensemble des deux arbres 31, 32 est entraîné par la poulie 40 sous l'action de la courroie 41.

La figure 2b montre les deux cames 10, 20 non déphasées, ce qui correspond aux diagrammes de la figure 1a.

La figure 2b au contraire montre les deux cames 10, 20 déphasées, réalisant par exemple les diagrammes de la figure 1 b.

Le mode de réalisation représenté sur la figure 3, qui n'est pas conforme à l'invention, se distingue du mode de réalisation selon l'invention en ce que la came 10' commandant la soupape 1 d'admission à calage fixe est montée sur l'arbre 31' à cames d'échappement. Un système 41 de couplage mécanique permet à la came 10' d'admission montée sur l'arbre 31' d'échappement de commander la soupape 1 d'admission à calage fixe.

La soupape 2 à calage ajustable est commandée par une came 20 apte à être déphasée angulairement par le déphaseur 50 par rotation de l'arbre 32 d'admission, l'arbre 31' d'échappement étant fixe.

La différence essentielle entre les deux modes de réalisation décrits est que le mode de la figure 3 n'exige pas une configuration d'arbres à cames comprenant un arbre externe creux dans lequel un deuxième est monté concentrique, conduisant à une réalisation plus simple.

Par contre, ce mode de réalisation nécessite un organe 41 de couplage entre une came d'échappement et la soupape d'admission à calage fixe.

L'exposé fait ci-dessus en référence à la figure 3 suppose un déphasage à l'admission. Il est clair que le même schéma de principe peut être utilisé dans le cas d'un déphasage à l'échappement, simplement en inversant les termes échappement et admission.

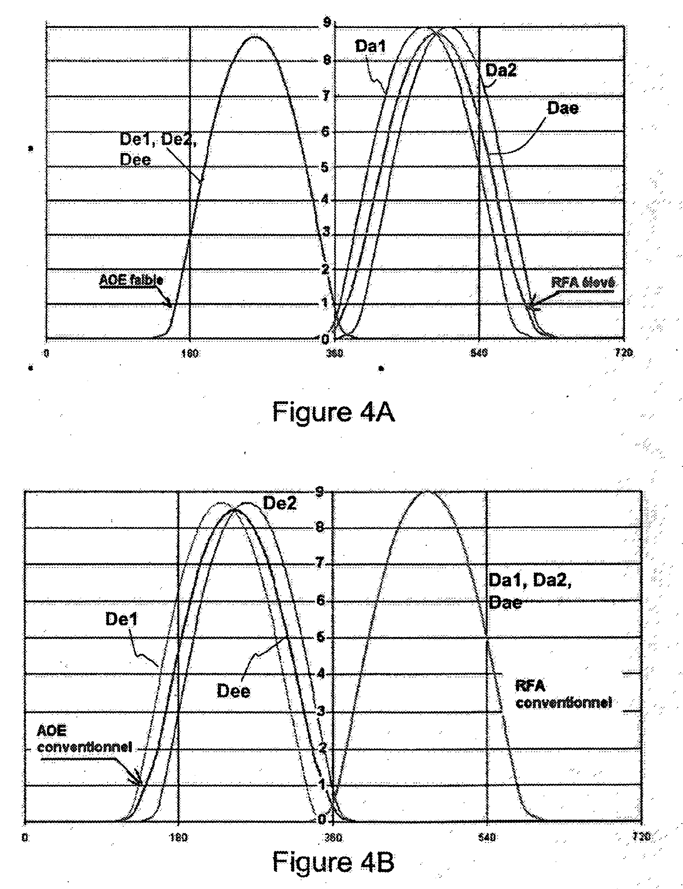

Dans le mode illustré à la figure 4, on cherche à déphaser à la fois une des deux soupapes d'admission et une des deux soupapes d'échappement, ceci pour avoir, à bas régime moteur (figure 4A), une détente des gaz favorisée, ce qui réduit le pompage par refoulement, avec ainsi une avance d'ouverture à l'échappement AOE faible (les levées des soupapes De1 et De2 sont confondues avec la courbe équivalente Dee) et un retard de la fermeture à l'admission RFA au contraire élevé (Da1 déphasé par rapport à Da2, donnant une courbe équivalente Dae large), et à régime moteur plus élevé (figure 4B), une ouverture équivalente à l'échappement large (comme de façon conventionnelle sur la plupart des moteurs) et un retard de fermeture à l'admission peu élevé, également comme de façon conventionnelle.

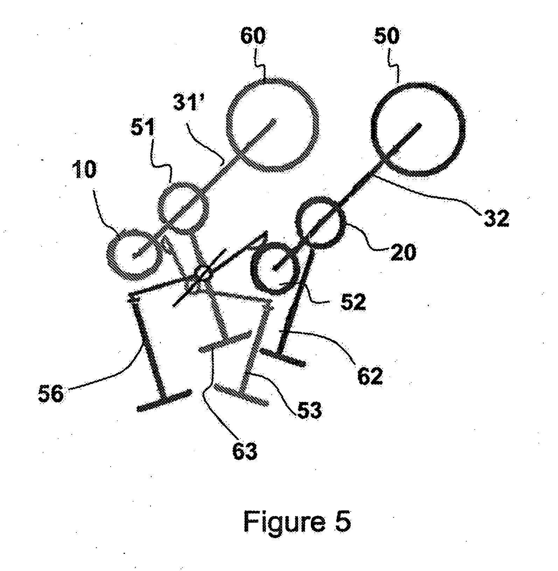

Si comme illustré sur la figure 4, on cherche à obtenir à la fois un déphasage à l'admission et à l'échappement pour favoriser la détente des gaz et réduire le pompage par refoulement, afin d'obtenir des lois de levées équivalentes avec un avance d'ouverture à l'échappement AOE faible et un retard de la fermeture à l'admission RFA au contraire élevé, on pourra utiliser le mode de la figure 5, qui n'est pas cependant conforme à l'invention.

Dans ce mode, l'arbre à cames d'échappement 31' porte une came d'échappement à calage fixe 51 commandant la soupape 63 et une came d'admission 10 à calage fixe. La poulie d'entraînement de l'arbre à cames d'échappement est ici une poulie fixe 60.

L'arbre à cames d'admission 32 est entraîné par une poulie 50 avec déphaseur angulaire et porte une came d'admission à calage variable 20 qui commande la soupape à calage variable 62 et une came d'échappement 52 donc également à calage variable.

Entre les deux arbres 31' et 32, un système mécanique permet de commander d'une part la soupape d'admission à calage fixe 53 et la soupape d'échappement à calage fixe 55 et d'autre part la soupape d'échappement à calage variable 56. Le système mécanique permet ainsi à la came admission disposée sur l'arbre à came d'échappement de commander la soupape d'admission et vice versa.

## Revendications

1. Procédé pour opérer un moteur à combustion interne dont les chambres de combustion associées à chacun des pistons sont munies d'au moins deux soupapes d'admission comportant une étape de détermination de la charge moteur et lorsque le moteur est en charge partielle, une étape de déphasage des levées des soupapes d'admission pour générer une loi de levée équivalente à une loi d'admission large pour réaliser le cycle d'Atkinson, et une étape de provision d'un ensemble pour obtenir le déphasage comportant une première came (10) pour la commande d'une première soupape d'admission, disposée sur un premier (31) arbre à cames, une deuxième came (20) pour la commande d'une deuxième soupape d'admission, liée à un deuxième arbre (32) à cames, concentrique au premier arbre (31) et disposé à l'intérieur du premier arbre (31), ledit deuxième arbre (32) étant associé à un déphaseur angulaire (50) apte à faire varier la position angulaire d'une came par rapport à l'autre par rotation d'un arbre à cames par rapport à l'autre, **caractérisé en ce que** le procédé pourvoit que la deuxième came (20) soit liée par un toc d'entrainement (21) au deuxième arbre (32), le toc (21) se déplaçant dans une encoche du premier arbre et **en ce que** les deux arbres soient liés ou entrainés par une même poulie entrainée elle-même par une courroie (41), ledit deuxième arbre (32) étant également entrainé par la courroie (41).

2. Procédé selon la revendication 1, **caractérisé en ce que** le déphasage est réduit aux charges moteur intermédiaires.

3. Procédé selon l'une quelconque des revendications précédentes, **caractérisé en ce que** les soupapes d'admission présentent un même diagramme d'ouverture.

4. Procédé selon l'une quelconque des revendications précédentes, appliqué à un moteur dont les chambres de combustion associées à chacun des pistons sont munies d'au moins deux soupapes d'échappement, **caractérisé de plus par** une étape de déphasage des levées des soupapes d'échappement pour générer une loi équivalente à une loi d'échappement large lorsque le moteur est en pleine charge et à une loi d'échappement étroite lorsque le moteur est en charge réduite.

5. Procédé selon la revendication 4 **caractérisé en ce que** l'étape de déphasage des levées des soupapes d'échappement est obtenue au moyen d'un ensemble comportant une première came (10) pour la commande d'une première soupape d'échappement, disposée sur un premier (31') arbre à cames, une deuxième came (20) pour la commande d'une deuxième soupape d'échappement, liée à un deuxième arbre (31) à cames, concentrique au premier arbre (31) à cames et un déphaseur angulaire (50) apte à faire varier la position angulaire d'une came par rapport à l'autre par rotation d'un arbre à cames par rapport à l'autre.

## Claims

1. Method for operating an internal combustion engine of which the combustion chambers associated to each of the pistons are equipped with at least two inlet valves, comprising a step of determining the engine load and, when the engine is under part load, a step of phase shifting the valve lifts of the inlet valves in order to generate a valve lift law equivalent to a wide inlet law in order to carry out the Atkinson cycle, and a step of providing an assembly in order to obtain the phase shift comprising a first cam (10) to control a first inlet valve, positioned in a first (31) camshaft, a second cam (20) to control the second inlet valve, connected to a second camshaft (32), concentric with the camshaft (31) and positioned inside the first shaft (31), the said shaft (32) being associated with an angular phase-shifter (50) capable of varying the angular position of one cam with respect to the other by rotating one camshaft with respect to the other, **characterized in that** the method makes provision for the second cam (20) to be connected by a driving dog (21) to the second shaft (32), the dog (21) moving in a notch of the first shaft and **in that** the two shafts are connected or driven by one and the same pulley itself driven by a belt (41), the said second shaft (32) also being driven by the belt (41).

2. Method according to Claim 1, **characterized in that** the phase shift is reduced at intermediate engine loads.

3. Method according to either one of the preceding claims, **characterized in that** the inlet valves have the same valve opening diagram.

4. Method according to any one of the preceding claims, applied to an engine of which the combustion chambers associated with each of the pistons are equipped with at least two exhaust valves, additionally **characterized by** a step of phase-shifting the valve lifts of these exhaust valves in order to generate a lift law equivalent to a wide exhaust law when the engine is under full load and to a narrow exhaust law when the engine is under light load.

5. Method according to Claim 4, **characterized in that** the step of phase-shifting the exhaust valve lifts is obtained by means of an assembly comprising a first cam (10) to control a first exhaust valve, positioned on a first (31') camshaft, a second cam (20) to control a second exhaust valve, connected to a second camshaft (31), concentric with the first camshaft (31), and an angular phase shifter (50) able to vary the angular position of one cam with respect to the other by rotating one camshaft with respect to the other.

## Patentansprüche

1. Verfahren zum Betreiben einer Brennkraftmaschine, deren Brennkammern, die jeweils einem der Kolben zugeordnet sind, mit wenigstens zwei Einlassventilen versehen sind, mit einem Schritt des Bestimmens der Maschinenlast und, wenn die Maschine unter Teillast arbeitet, einem Schritt der Erzeugung einer Phasendifferenz zwischen den Hüben der Einlassventile, um ein Hubgesetz zu erzeugen, das zu einem Gesetz mit großem Einlass äquivalent ist, um den Atkinson-Zyklus zu verwirklichen, und einem Schritt des Vorsehens einer Anordnung, um die Phasendifferenz zu erhalten, die einen ersten Nocken (10) für die Steuerung eines ersten Einlassventils, der an einer ersten Nockenwelle (31) angeordnet ist, und einen zweiten Nocken (20) für die Steuerung eines zweiten Einlassventils, der mit einer zweiten Nockenwelle (32) verbunden ist, die zu der ersten Welle (31) konzentrisch ist und innerhalb der ersten Welle (31) angeordnet ist, enthält, wobei der zweiten Welle (32) eine Winkelphasendifferenz-Erzeugungseinrichtung (50) zugeordnet ist, die die Winkelposition eines Nockens in Bezug auf den anderen Nocken durch Drehen einer Nockenwelle relativ zu der anderen Nockenwelle verändern kann, **dadurch gekennzeichnet, dass** das Verfahren vorsieht, dass der zweite Nocken (20) durch eine Mitnehmernase (21) mit der zweiten Welle (32) verbunden ist, wobei sich die Nase (21) in einer Nut der ersten Welle verlagert, und dass die zwei Wellen durch dieselbe Riemenscheibe, die ihrerseits durch einen Riemen (41) angetrieben wird, verbunden sind oder angetrieben werden, wobei die zweite Welle (32) ebenfalls durch den Riemen (41) angetrieben wird.

2. Verfahren nach Anspruch 1, **dadurch gekennzeichnet, dass** die Erzeugung der Phasendifferenz auf Zwischenlasten der Maschine eingeschränkt ist.

3. Verfahren nach einem der vorhergehenden Ansprüche, **dadurch gekennzeichnet, dass** die Einlassventile dasselbe Öffnungsdiagramm aufweisen.

4. Verfahren nach einem der vorhergehenden Ansprüche, das auf eine Maschine angewendet wird, deren Brennkammern, die jeweils einem der Kolben zugeordnet sind, mit wenigstens zwei Auslassventilen versehen sind, außerdem **gekennzeichnet durch** einen Schritt des Erzeugens einer Phasendifferenz zwischen den Hüben der Auslassventile, um ein Gesetz zu erzeugen, das zu einem Gesetz mit großem Auslass äquivalent ist, wenn die Maschine unter Volllast arbeitet, und das zu einem Gesetz mit kleinem Auslass äquivalent ist, wenn die Maschine unter reduzierter Last arbeitet.

5. Verfahren nach Anspruch 4, **dadurch gekennzeichnet, dass** der Schritt des Erzeugens einer Phasendifferenz zwischen den Hüben der Auslassventile mittels einer Anordnung erhalten wird, die einen ersten Nocken (10) für die Steuerung eines ersten Auslassventils, der an einer ersten Nockenwelle (31') angeordnet ist, einen zweiten Nocken (20) für die Steuerung eines zweiten Auslassventils, der mit einer zweiten Nockenwelle (31) verbunden ist, die zu der ersten Nockenwelle (31) konzentrisch ist, und eine Winkelphasendifferenz-Erzeugungseinrichtung (50), die die Winkelposition eines Nockens in Bezug auf den anderen Nocken durch Drehen einer Nockenwelle relativ zu der anderen Nockenwelle verändern kann, enthält.
